Europäisches Patentamt

European Patent Office

Office européen des brevets

(19)

(11) Veröffentlichungsnummer: **0 267 176 B1**

(12) **EUROPÄISCHE PATENTSCHRIFT**

(45) Veröffentlichungstag der Patentschrift: **08.01.92**

(51) Int. Cl.5: **C04B  24/24**, C04B 41/61, C04B 32/02

(21) Anmeldenummer: 87890229.5

(22) Anmeldetag: 14.10.87

(54) **Beschichtungsmittel für Baukörper.**

(30) Priorität: 24.10.86 AT 2835/86

(43) Veröffentlichungstag der Anmeldung:
**11.05.88 Patentblatt  88/19**

(45) Bekanntmachung des Hinweises auf die
Patenterteilung:
**08.01.92 Patentblatt  92/02**

(84) Benannte Vertragsstaaten:
**AT BE CH DE ES FR GB GR IT LI LU NL SE**

(56) Entgegenhaltungen:
EP-A- 0 127 721
DE-A- 3 026 991
DE-C- 912 910
US-A- 3 147 127

PATENT ABSTRACTS OF JAPAN, Band 10,
Nr. 112 (C-342)[2169], 25. April 1986; & JP-
A-60 243 003 (TOUKIYOU YUUKI KAGAKU KO-
GYO K.K.) 03-12-1985

(73) Patentinhaber: **ALLGEMEINE BAUGESELL-
SCHAFT - A. PORR AKTIENGESELLSCHAFT
Rennweg 12
A-1031 Wien(AT)**

(72) Erfinder: **Howanietz, Friedrich, Dr.
Bahngasse 3
A-2261 Angern a.d. March(AT)**
Erfinder: **Hinterhofer, Otto, Prof.Dipl.Ing.Dr.
Nikolaus Dörygasse 10
A-3400 Klosterneuburg(AT)**
Erfinder: **Greber, Gerd, Prof.Ing.Dr.
Anzengruberstrasse 11
A-2540 Bad Vöslau(AT)**
Erfinder: **Stöckl, Friedrich, Dr.
Mariahilferstrasse 49
A-1060 Wien(AT)**

(74) Vertreter: **Collin, Hans, Dipl.-Ing. Dr. et al
Patentanwälte Dipl.-Ing. Dr. Hans Collin
Dipl.-Ing. Erwin Buresch Dipl.-Ing. Dr. Helmut
Wildhack Dipl.-Ing. Armin Häupl Mariahilfer
Strasse 50
A-1070 Wien(AT)**

## Beschreibung

Die Erfindung betrifft die Verwendung einer Mischung mit insbesondere hydraulischem Bindemittel zur Beschichtung von, insbesondere mit Stahlbeton aufgebauten, Baukörpern zum Schutz gegen Kohlendioxid und/oder Schwefeloxide, sowie ein Verfahren zum Schutz von Baukörpern gegen Kohlendioxid und/oder Schwefeloxide, wobei der Baukörper mit einer Bindemittel enthaltenden Mischung zumindest teilweise beschichtet wird.

Das Altern Von Baukörpern, die nicht einer direkten mechanischen Oberflächenbeanspruchung ausgesetzt sind, erfolgt vor allem durch atmosphärischen Einfluß, d.h. vor allem durch die Schadstoffe, die aus der Luft, aus dem Regen oder anderen Wässern stammen, die mit den Baukörperoberflächen in Berührung kommen und ins Innere der Baukörper gelangen.

Es ist z.B. schon lange bekannt, daß nicht alle als Baumaterial verwendeten Steine vollständig dicht sind; ein typisches Beispiel ist der für Monumentalbauten früher eingesetzte poröse Kalksandstein. Aber auch von Beton weiß man, daß Betonkörper poröse Bauteile sind, da die zum Verarbeiten nötige Wassermenge stets größer ist als die Menge, die zum Hydratisieren des Zements nötig ist, so daß die im Frischbeton lediglich physikalisch bindbare Wassermenge später zu 100 % als Porenvolumen im fertig gehärteten Beton aufscheint. Überdies verschwindet auch der Raum, den chemisch bindbares Wasser im Frischbeton einnimmt, beim Aushärten nur zu etwa 75 %, so daß es nicht einmal theoretisch möglich ist, einen porenfreien Beton zu bilden. Es ist daher zu sagen, daß das Porenvolumen im Beton mit dem angewendeten W/Z-Wert im Frischbeton (Masse Verhältnis Wasser: Zement) ansteigt und davon auszugehen, daß auch hochdruckfeste Betone der Güteklasse B600 in jedem Fall noch etwa 10 % Porenvolumen aufweisen.

Die atmosphärischen Einflüsse sind daher auch bei Beton nicht auf dessen Oberfläche beschränkt, sondern eine Frage der Kapillarität und der Diffusion.

Um schädigende Einflüsse abzuhalten, kann man daher Betonkörper mit gas- und flüssigkeitsdichten Abdeckungen versehen; es hat sich aber gezeigt, daß Beton immer atmet -und atmen soll-, was häufig zum Abheben derartiger Beschichtungen nach einiger Zeit führt.

Ein praktisch allgegenwärtiger Luftbestandteil ist z.B. das $CO_2$, das durch Diffusion und Feuchtigkeitseinfluß beim Beton zur sogenannten Carbonatisierung führt, d.h. zum Abbau der natürlichen Alkalitätsreserve des Betons durch Umsetzung des freien $Ca(OH)_2$ mit $CO_2$ unter Ausbildung von $CaCO_3$. Dies ist bei unbewehrten Betonen weniger von Bedeutung, da damit keine Festigkeitseinbuße verbunden ist; bei Stahlbeton ergibt sich aber das Problem, daß der Bewehrungsstahl nur im stark alkalischen Milieu ausreichend gegen Korrosion passiviert ist. Erreicht dort die Carbonatisierungszone die Bewehrung, so wird dadurch der pH-Wert von etwa 12 auf Werte unter 9 herabgesetzt und es beginnt eine Korrosion des Bewehrungsstahls, die unkontrollierbar fortschreitet und bis zum mechanischen Versagen des Stahlbetons führen kann.

Als gefährlichster Atmosphärenbestandteil (Luft, Regen) für Steine am Bausektor, insbesondere Kalksandstein und Beton, haben sich Schwefeloxide, insbesondere das $SO_2$ der Rauchgase, gezeigt. Durch deren Einfluß wird ebenso die Alkalitätsreserve des Betons abgebaut, wobei aber als Umsetzungsprodukt Ettringit der Formel $3CaO . Al_2O_3 . 3CaSO_4 . 31 H_2O$ gebildet wird, der auf Grund seines Wassergehalts zum Zertreiben des Betons führt, ebenso wie der Gips, der sich bei höheren $SO_2$-Konzentrationen bildet.

Ein Vorschlag gegenüber diesen schädlichen Atmosphärilien besteht in der Tränkung von Bausteinen mit Kunstharzen; dies wird mit gutem Erfolg bei der Sanierung von Bauwerken aus Kalksandstein angewendet, bleibt aber für die allgemeine Anwendung unerschwinglich.

Ein weiterer Vorschlag besteht darin, eine "Diffusionsbremse" dahingehend anzubringen, daß Betonkörper mit Zementbeschichtungen versehen werden, die als Füllstoffe statt Sanden mindestens teilweise grobkörnigen Portlandzementklinker (z.B. Körnung 0,1/1 mm) enthalten. Hier wird eine oberflächliche Alkalitätsreserve gebildet, die so lange wirksam ist, bis die Klinkerteilchen reagiert haben.

Es bestand die Aufgabe, das Grundprinzip der Alkalitätsreserve noch weiter zu verbessern; erfindungsgemäß vorgeschlagen wird einerseits die Verwendung einer Mischung mit insbesondere hydraulischem Bindemittel zur Beschichtung von, insbesondere mit Stahlbeton aufgebauten, Baukörpern zum Schutz gegen Kohlendioxid und oder Schwefeloxide, die vor allem dadurch gekennzeichnet ist, daß die Mischung unbeladene Anionentauscher, also schwach basische Anionentauscher als freie Base oder stark basische Anionentauscher in der Hydroxidform enthält, die Kohlendioxid und/oder Schwefeloxide aus der Luft reversibel binden, sowie anderseits ein Verfahren zum Schutz von Baukörpern gegen Kohlendioxid und/oder Schwefeloxide, wobei der Baukörper mit einer Bindemittel enthaltenden Mischung zumindest teilweise beschichtet wird, das vor allem dadurch gekennzeichnet ist, daß die Beschichtung unbeladene Anionentauscher enthält, die Kohlendioxid und/oder Schwefeloxide reversibel binden, und daß die unbeladenen Anionentauscher der Beschichtung regeneriert werden.

Vorzugsweise werden als Anionentauscher organische Ionentauscher, insbesondere makroporöse Ionentauscher eingesetzt.

Die erfindungsgemäß eingesetzte Mischung kann neben Anionentauscher und mindestens einem Bindemittel gegebenenfalls Füllstoffe und gegebenenfalls Zusätze wie insbesondere Plastiziermittel, Haftvermittler u.dgl. enthalten.

Die erfindungsgemäß eingesetzte Mischung enthält ein organisches und/oder anorganisches, vorzugsweise ein hydraulisches, Bindemittel; als Füllstoffe können inerte und/oder reaktive Füllstoffe, insbesondere kondensierte Kieselsäure und/oder grobkörniger Portlandzementklinker, ferner auch mindestens ein poröser Füllstoff vorgesehen sein.

Die damit erzielte Beschichtung ist im gesamten gas- und mehr oder weniger flüssigkeitsdurchlässig, um einerseits die Atmungsaktivität des Baukörpers nicht zu behindern und anderseits durch Waschen regenerierbar zu sein; zur Verbesserung ihrer Haftung am Beton und ihrer Schlagzähigkeit wird weiterhin vorgeschlagen, daß sie mindestens einen Kunststoff, der mindestens zum Teil Tieftemperaturklebrigkeit, vorzugsweise einen $T_{A\ max}$-Wert (DIN 53 445) von höchstens -8° aufweist, als Füllstoff und/oder Haftvermittler enthält. Auch Bitumen kann anstelle oder zusätzlich zum Kunststoff mit Tieftemperaturklebrigkeit in der Mischung enthalten sein.

Ionentauscher, die für den Einsatz in der erfindungsgemäß eingesetzten Mischung in Frage kommen, sind feste anorganische oder organische polyvalente Stoffe, die aus Lösungen negative Ionen aufnehmen und dafür eine äquivalente Menge Ionen gleichen Vorzeichens abgeben. Dabei enthalten die Zwischenräume des Gerüstes die austauschbaren Gegenionen, die die Ladung des Gerüstes kompensieren, jedoch konstitutionell bzw. zum Aufbau des Gerüstes selbst (der Matrix) nicht notwendig sind.

Organische Ionentauscher sind vorzugsweise Ionentauscher auf Kunststoffbasis, z.B. hergestellt aus Phenolformaldehyd-Harzen, Polystyrol und Copolymerisaten, oder Polyacrylaten. Die aktiven Gruppen sind entweder bereits im Monomer enthalten, oder werden nachträglich in das Makromolekül eingeführt. Kunststoffionentauscher sind grundsätzlich nicht lösbar, jedoch infolge ihrer Gelstruktur unter manchen Voraussetzungen quellbar. Der Ionentauschvorgang ist stets reversibel. Die Rückreaktion stellt die Regenerierung des Ionentauschers mit überschüssiger Lösung dar. Sie wird dann durchgeführt, wenn die Kapazität des Ionentauschers erschöpft ist, da das Aufnahmevermögen des Ionentauschers für Fremddionen nur bis zur Einstellung des Gleichgewichtes möglich ist.

Der Einbau der Ionentauscher sollte dem Sieblinienaufbau des Füllers der Mischung entsprechen. Da die Ionentauscher industriell gefertigt werden, stellen sie eine Einkornfraktion dar. Diese ist solcherart in den Sieblinienaufbau der Mischung einzufügen, daß das Gefüge und damit der Bestand der damit hergestellten Beschichtung erhalten bleibt mit allen notwendigen Eigenschaften.

Der Ionentauscher muß auf die Reaktion -Bindung- von atmosphärisch in die Beschichtung eindringendem Kohlendioxid und Schwefelmon- bzw. -dioxid eingestellt sein und die Möglichkeit der Regenerierbarkeit durch Reaktivierung mit einer überschüssigen Lösung -z.B. Ammoniak- bieten.

Der Ionentauscher darf die physikalisch-mechanischen Eigenschaften der Beschichtungsmasse, wie Atmungsaktivität -Dampfdiffusion-, Haftfähigkeit, Elastizität und Temperaturstabilität nicht beeinträchtigen.

Grundsätzlich können die für den gegenständlichen Einsatzzweck in Frage kommenden organischen Ionentauscher im Hinblick auf ihre Reaktivität in stark basische und schwach basische Verbindungen unterteilt werden. Bei beiden ist vorzugsweise ein Styrol-Divinylbenzol-Copolymer der Träger. Als Festionen erhalten stark basische Ionentauscher quartäre Ammoniumsalze und schwach basische Ionentauscher tertiäre Amine. Als austauschbares Gegenion kommt vor allem $OH^-$ in Betracht.

Hinsichtlich ihrer Konsistenz ist zwischen gelförmigen und makroporösen Ionentauschern zu unterscheiden. Gelförmige Ionentauscher besitzen Poren mit Durchmessern von 10 - 30 Å, bei makroporösen Ionentauschern sind die Porendurchmesser der Makroporen um bis zwei 10er- Potenzen größer. Dementsprechend weisen gelförmige Ionentauscher eine höhere Packungsdichte und damit auch eine etwas höhere Kapazität als makroporöse Ionentauscher auf. Der wesentliche Vorteil der makroporösen Ionentauscher liegt darin, daß die großen Poren das Einund Auswandern der Ionen wesentlich erleichtern. Dementsprechend ist auch die Regenerierung dieser Ionentauscher schneller und vollständiger durchführbar. Auch ist die Gefahr der Verlegung der Tauscherporen geringer als bei gelförmigen Ionentauschern.

Bei der Auswahl von Ionentauschern sind folgende Parameter zu berücksichtigen:

Ein Austausch von $CO_2$ und $SO_2$ in trockener Luft würde praktisch nicht stattfinden, da in der Gasform naturgemäß kaum Ionen vorliegen; diese Situation ist bei Baukörpern aber nicht gegeben; sie enthalten stets Feuchtigkeit. Überdies sind viele Ionentauscher hygroskopisch, sodaß in normaler Umgebungsluft ein Austausch nach Lösung und Dissoziation der Atmosphärilien im adsorbierten Wasser immer stattfindet.

Zur Reaktivität von Ionentauschern gegenüber den Gasen $CO_2$ und $SO_2$ kann gesagt werden, daß der

3

Austausch von $SO_2$ über das Hydrogensulfition zumindest in wässeriger Lösung kein Problem darstellt. $CO_2$ kann über das Hydrogencarbonation ausgetauscht werden. Allerdings ist die Affinität dieses Ions zu Ionentauschern geringer. Deshalb erscheint in erster Linie der Einsatz stark basischer Ionentauscher erfolgversprechend.

Zur Regenerierung der Ionentauscher sollten keine Laugen verwendet werden, die mit den auszutauschenden Ionen $HSO_3^-$ und $HCO_3^{-'}$ schwer lösliche Salze bilden. Dadurch bestünde die Gefahr einer Blockierung des Ionentauschers. Im allgemeinen sind Kali- oder Natronlauge zur Regenerierung zu empfehlen, während $Ca(OH)_2$ abzulehnen ist. Bei ihrem üblichen Einsatz in wässerigen Systemen stellt die Regenerierung der Ionentauscher kein Problem dar, da sie mit ca. 5%-igen Laugen gespült werden können. Eine Regenerierung des Ionentauschers in einer Beschichtung ist möglich, wenn z.B. durch Absprühen genügend Alkalien in die Beschichtung gelangen. Dementsprechend erscheint vor allem die Verwendung makroporöser Ionentauscher und ein möglichst poriger Aufbau der gesamten Beschichtung empfehlenswert. Dies erleichtert auch den Zutritt von $CO_2$ und $SO_2$ zum Ionentauscher und entspricht der Forderung nach einer möglichst großen Wasserdampfdiffusion.

Zur Überprüfung der Auswirkung von Ionentauschern in Beschichtungen für Betonoberflächen wurden folgende Versuche gemacht:

Als Substrat diente ein mittel-poröser Beton mit einem Zementgehalt von 300 $kg/m^3$ und einem W/Z-Wert von 0,75. Dieser Beton wurde in unten verschlossenen, gasdichten Kunststoffröhren, Durchmesser 5 cm, Höhe 12 cm, 10 cm hoch eingegossen. Nach einer 14-tägigen Erhärtung wurde der Beton mit den Mischungen nach Tabelle 1 beschichtet und anschließend in einem Glasbehälter mit eingeschliffenem Deckel und zwei Öffnungen gelagert. Ein Gemisch aus 80 % Luft, über eine gesättigte Natrium-Chloridlösung mit NaCl-Bodensatz geführt, und 20 % $CO_2$ wurde während der gesamten Lagerdauer in den Behälter eingeblasen. Die Versuchstemperatur betrug 20 °C.

Nach beendete r Lagerung wurden die Prüfkörper geschnitten und die Karbonatisierungstiefe, -d.h. die Dicke der sich von der Oberfläche ins Innere der Prüfkörper erstreckenden Zone mit eine pH = 8-, bestimmt. Alle an der Oberfläche der Proben aufgebrachten Mischungen, außer den Mischungen 3, 13, 14, 15 und 16, waren gegenüber 2 bar Wasserdruck praktisch wasserundurchlässig, also druckwasserfest, aber gut durchfeucht- und spülbar.

## TABELLE 1

| Mischungen | Frisch-raumgew. $(kg/m^3)$ | MISCHUNGSKOMPONENTEN ( kg / $m^3$ ) | | | | | | |
|---|---|---|---|---|---|---|---|---|
| | | Zement PZ 375 | $Ca(OH)_2$ | Kunststoff-dispersion (Kunststoffanteil) | Wasser | Füller inert | Alkali - klinker | Ionen-tauscher |
| 1 | 1300 | 545 | -- | -- | 210 | -- | -- | 545 |
| 2 | 1753 | 532 | -- | -- | 225 | -- | 694 | 302 |
| 3 | 1160 | -- | 390 | -- | 350 | -- | -- | 420 |
| 4 | 1600 | -- | 382 | -- | 340 | -- | 680 | 198 |
| 5 | 940 | -- | -- | 402 | -- | -- | -- | 538 |
| 6 | 1351 | -- | -- | 398 | -- | -- | 633 | 319 |
| 7 | 1252 | -- | -- | 404 | -- | 524 | -- | 324 |
| 8 | 1545 | -- | -- | 374 | -- | 578 | 413 | 180 |
| 9 | 1220 | 404 | -- | 408 | -- | -- | -- | 408 |
| 9A | 1213 | 403 | -- | 406 | -- | -- | -- | 404 |
| 9B | 1210 | 403 | -- | 404 | -- | -- | -- | 403 |
| 9C | 1224 | 409 | -- | 409 | -- | -- | -- | 406 |
| 10 | 1505 | 376 | -- | 379 | 14 | -- | 523 | 227 |

EP 0 267 176 B1

| Mischungen | Frischraumgew. (kg/m³) | MISCHUNGSKOMPONENTEN (kg/m³) | | | | | | |
|---|---|---|---|---|---|---|---|---|
| | | Zement PZ 375 | Ca(OH)$_2$ | Kunststoffdispersion | Wasser | Füller inert | Alkali-klinker | Ionentauscher |
| 11 | 1472 | 366 | -- | 370 | 18 | 533 | -- | 185 |
| 12 | 1510 | 331 | -- | 334 | 32 | 482 | 230 | 101 |
| 13 | 1198 | -- | 340 | 369 | 120 | -- | -- | 369 |
| 14 | 1360 | -- | 289 | 309 | 145 | -- | 428 | 186 |
| 15 | 1325 | -- | 295 | 318 | 96 | 457 | -- | 159 |
| 16 | 1517 | -- | 299 | 322 | 111 | 465 | 223 | 97 |
| 17 | 1202 | 192 | 178 | 396 | 40 | -- | -- | 396 |
| 18 | 1491 | 180 | 169 | 365 | 53 | -- | 504 | 220 |
| 19 | 1450 | 175 | 158 | 360 | 48 | 502 | -- | 207 |
| 20 | 1600 | 178 | 160 | 355 | 53 | 498 | 250 | 106 |
| 21 | 1438 | 326 | -- | 329 | 31 | 474 | 226 | 52 |
| 22 | 1225 | 408 | -- | 408 | -- | -- | -- | 409 |
| 23 | 1218 | 405 | -- | 406 | -- | -- | -- | 407 |

Bei den Mischungen 1 bis 21 wurden als Ionentauscher kugelförmige, stark basische, makroporöse Anionentauscher auf Styrol-Divinylbenzolbasis des Warenzeichens Merck Lewatit MP 5080 oder Amberlyst A-26 mit $\sim N^+(CH_3)_3$ als Festion, in der OH-Form eingesetzt. Diese Ionentauscher sind z.B. mit wässeriger Natronlauge (Konzentration etwa 2 bis 4 Gew.-%) regenerierbar.

Bei Mischung 22 wurde als Ionentauscher ein kugelförmiger, stark basischer, gelförmiger Anionentauscher auf Styrol-Divinylbenzolbasis des Warenzeichens Amberlite IRA-410 mit $\sim N^+(CH_3)_2$ $CH_2OH$ als

Festion in der OH-Form eingesetzt. Dieser Ionentauscher ist z.B. mit wässeriger Natronlauge (Konzentration etwa 2 bis 4 Gew.-%) regenerierbar

Bei Mischung 23 wurde als Ionentauscher ein kugelförmiger, schwach basischer, gelförmiger Anionentauscher auf Styrol-Divinylbenzolbasis des Warenzeichens Amberlyst IR-45 mit $\sim N(R)_2$ als Festion und $OH^-$ als Gegenion eingesetzt. Dieser Ionentauscher ist z.B, mit wässeriger Natronlauge (Konzentration etwa 4 Gew.-%) regenerierbar.

Bei den Beispielen 1 bis 23 wurde eine Dispersion eines Acrylcopolymerisats mit einem $T_{\Lambda max}$-Wert von $< -36\,°C$, beim Beispiel 9A eines Butadienstyrols mit einem $T_{\Lambda max}$-Wert von $-16\,°C$, beim Beispiel 9B eines Polyvinylpropionats mit einem $T_{\Lambda max}$-Wert von $+7\,°C$ und beim Beispiel 9C eines Acrylstyrolmischpolymerisats mit einem $T_{\Lambda max}$-Wert von $-10\,°C$, jeweils bestimmt nach DIN 53445, eingesetzt.

TABELLE 2

| Mischung | Auftrags- dicke (mm) | Gesamt- Lagerungs- zeit (Tage) | Nachbehandlung Anzahl | nach Tagen | Karbonati- sierungs- tiefe (mm) pH-Wert 8 |
|---|---|---|---|---|---|
| 0-Beton | -- | 56 | -- | -- | 42 |
| 1 | 10 | 56 | -- | -- | 4 |
| 2 | 15 | 56 | -- | -- | 2 |
| 3 | 7 | 56 | -- | -- | 12 |
| 4 | 7 | 56 | -- | -- | 10 |
| 5 | 3 | 56 | -- | -- | 15 |
| 5 | 3 | 56 | 1x | 28 | 3 |
| 6 | 5 | 56 | -- | -- | 0 |
| 6 | 5 | 112 | -- | -- | 4 |
| 6 | 5 | 112 | 3x | 28 | 0 |
| 7 | 2 | 56 | -- | -- | 12 |
| 8 | 2 | 56 | -- | -- | 8 |
| 9 | 4 | 56 | -- | -- | 2 |
| 9A | 4 | 56 | -- | -- | 4 |
| 9B | 4 | 56 | -- | -- | 6 |
| 9C | 4 | 56 | -- | -- | 3 |
| 10 | 2 | 56 | -- | -- | 3 |
| 11 | 4 | 56 | -- | -- | 12 |
| 12 | 4 | 56 | -- | -- | 10 |
| 13 | 3 | 56 | -- | -- | 8 |
| 14 | 3 | 56 | -- | -- | 9 |
| 15 | 3 | 56 | -- | -- | *) |

*) nicht bestimmt

| Mischung | Auftrags- dicke (mm) | Gesamt- Lagerungs- zeit (Tage) | Nachbehandlung Anzahl | nach Tagen | Karbonati- sierungs- tiefe (mm) pH-Wert 8 |
|---|---|---|---|---|---|
| 16 | 3 | 56 | -- | -- | 20 |
| 17 | 3 | 56 | -- | -- | 3 |
| 18 | 3 | 56 | -- | -- | 2 |
| 19 | 3 | 56 | -- | -- | 7 |
| 20 | 3 | 56 | -- | -- | 11 |
| 20 | 3 | 56 | 2x | 14 | 0 |
| 21 | 10 | 56 | -- | -- | 3 |
| 22 | 3 | 56 | -- | -- | 2 |
| 23 | 3 | 56 | -- | -- | 5 |

Die Nachbehandlungen erfolgten in der Weise, daß jeweils nach Ablauf der angegebenen Zeitspanne eine weitere Beschichtung auf die vorhandene Beschichtung aufgetragen wurde. Die Beschichtungen zeigten ausgezeichnete Haftung auf dem Substrat sowie aufeinander bei allen Temperaturen und ebenso gute Festigkeitswerte bei ungestörter Atmungsfähigkeit. An der Mischung 9 wurden nach 56 Tagen folgende mechanischen Eigenschaften nach DIN 53455 ermittelt:

| Prüftemperatur (°C) | Dehnung (%) | Zugfestigkeit (N/mm$^2$) |
|---|---|---|
| +20 | 24,7 | 0,36 |
| -20 | 30,9 | 1,83 |

Basische Ionentauscher sind in alkalisch reagierender Matrix in der Lage, neben $CO_2$ und den Schwefeloxiden auch $H_2S$ und Stickoxide, die ebenfalls zu den in der Praxis auftretenden Luftverschmutzungen gehören, reversibel zu binden. Ebenfalls ist es möglich, neutral bis schwach sauer eingestellten Ionentauscher für den oben angegebenen Zweck mit Erfolg einzusetzen; diese sind in der Lage, auch Ammoniak reversibel zu binden und wurden vor allem bei nicht alkalisch reagierenden Beschichtungen eingesetzt, also vor allem solchen, die organisch gebunden sind und keine alkalischen Füllstoffe enthalten.

Als Beispiel für poröse Füllstoffe, die eine gute Verteilbarkeit der Atmosphärilien und der Waschflüssigkeiten in den Beschichtungen zum Zwecke haben, wird u.a. Blähton oder Blähglimmer, sowie Vermiculit genannt.

Die erfindungsgemäß eingesetzten Mischungen können als Bindemittel anorganische - vorzugsweise hydraulische - und/oder organische Bindemittel enthalten, mit der Bedingung, daß die Porosität der damit erzielten Beschichtungen erhalten bleibt; sie können somit auch rein organisch gebunden werden, beispielsweise durch Anwendung bekannter Dispersionen.

Der wesentliche erfindungsgemäße Bestandteil der Mischungen ist ein regenerierbarer Anionentauscher, der in Kombination mit reaktiven Füllstoffen, z.B. kondensierter Kieselsäure und insbesondere Alkaliklinker, d.h. Portlandzementklinker, und/oder inerten Füllstoffen vorliegen kann.

Weiterhin kann die Mischung gegebenenfalls färbende Zusätze, Fasern, Gewebe und übliche Beschichtungszusätze, wie Verdickungsmittel, Lichtschutzmittel und ähnliches enthalten. Ebenfalls kann die Mischung oberflächenaktive Substanzen enthalten.

Auf die Baukörper können zur Vorbehandlung Haftvermittlerschichten aufgebracht werden, auf die dann die eigentliche(n) Beschichtung(en) erfolgt(en). Als Haftvermittlerschichten werden vor allem solche eingesetzt, die einen Gehalt an oben erwähnten Kunststoffen mit Tieftemperaturklebrigkeit und/oder Bitumen aufweisen, und die Füllstoffe zur Erzielung von Porosität enthalten, insbesondere auch alkalisch reagierende Verbindungen (z.B. Alkaliklinker, Zement) und weitere Zusätze, z.B. oberflächenaktive Substanzen, enthalten können.

Auf die Baukörper wird mindestens eine Beschichtungslage, gegebenenfalls unter Zwischenschaltung mindestens einer Haftvermittlerschicht zwischen Baukörper und Beschichtung und/oder zwischen Beschichtungslagen, aufgebracht.

Dabei werden insbesondere poröse Haftvermittler eingesetzt, die einen Gehalt an Bindemitteln sowie an mindestens einem Kunststoff mit Tieftemperaturklebrigkeit und/oder Bitumen und -vorzugweise porösen-Füllstoffen aufweisen.

Vorzugsweise enthalten die Haftvermittler anorganische, insbesondere hydraulische, Bindemittel.

Gegebenenfalls ist es auch möglich, Baukörper zu bilden, die durchgehend einen regenerierbaren Säurebinder enthalten; dies ist lediglich abhängig vom Einsatzzweck und Gestehungspreis. Hier ist insbesondere an vorgefertigte Verkleidungsplatten oder dergl. gedacht.

**Patentansprüche**

1. Verwendung einer Mischung mit insbesondere hydraulischem Bindemittel zur Beschichtung von, insbesondere mit Stahlbeton aufgebauten, Baukörpern zum Schutz gegen Kohlendioxid und/oder Schwefeloxide, dadurch gekennzeichnet, daß die Mischung unbeladene Anionentauscher, also schwach basische Anionentauscher als freie Base oder stark basische Anionentauscher in der Hydroxidform enthält, die Kohlendioxid und/oder Schwefeloxide aus der Luft reversibel binden.

2. Verwendung einer Mischung nach Anspruch 1, dadurch gekennzeichnet, daß die Mischung reaktive Füllstoffe, insbesondere kondensierte Kieselsäure und/oder grobkörnigen Portlandzementklinker, enthält.

3. Verwendung einer Mischung nach Anspruch 1 oder 2, dadurch gekennzeichnet, daß die Mischung einen porösen Füllstoff enthält.

4. Verwendung einer Mischung nach einem der Ansprüche 1-3, dadurch gekennzeichnet, daß die Mischung mindestens einen Kunststoff, der mindestens zum Teil Tieftemperaturklebrigkeit, vorzugsweise einen $T_{\Lambda\ max}$-Wert (DIN 53 445) von höchstens -8°C aufweist, als Füllstoff und/oder Haftvermittler umfaßt.

5. Verwendung einer Mischung nach einem der Ansprüche 1-4, dadurch gekennzeichnet, daß die Mischung mindestens ein Bitumen als Füllstoff und/oder Haftvermittler umfaßt.

6. Verfahren zum Schutz von Baukörpern gegen Kohlendioxid und/oder Schwefeloxide, wobei der Baukörper mit einer Bindemittel enthaltenden Mischung zumindest teilweise beschichtet wird, dadurch gekennzeichnet, daß die Beschichtung unbeladene Anionentauscher enthält, die Kohlendioxid und/oder Schwefeloxide reversibel binden, und daß die unbeladenen Anionentauscher der Beschichtung regeneriert werden.

7. Verfahren flach Anspruch 6, dadurch gekennzeichnet, daß der Baukörper mit der Mischung unter Zwischenschaltung mindestens einer Haftvermittlerschicht zwischen Baukörper und Beschichtung und/oder zwischen Beschichtungslagen beschichtet wird.

8. Verfahren nach Anspruch 7, dadurch gekennzeichnet, daß poröse Haftvermittler eingesetzt werden, die einen Gehalt an Bindemitteln sowie an mindestens einem Kunststoff mit Tieftemperaturklebrigkeit und/oder Bitumen und - vorzugsweise porösen - Füllstoffen aufweisen.

9. Verfahren nach Anspruch 8, dadurch gekennzeichnet, daß Haftvermittler eingesetzt werden, die anorganische, insbesondere hydraulische Bindemittel enthalten.

**Claims**

1. Use of a mixture with in particular hydraulic binder for the coating of building structures, in particular those made up of reinforced concrete, as a protection against carbon dioxide and/or sulphur oxides, characterized in that the mixture contains unloaded anion exchangers, thus weakly basic anion exchangers, as a free base, or strongly basic anion exchangers in hydroxide form reversibly binding carbon dioxide and/or sulfur oxides present in the air.

2. Use of a mixture according to claim 1, characterized in that the mixture contains reactive fillers, in particular condensed silicic acid and/or coarse-grained Portland cement clinker.

3. Use of a mixture according to claim 1 or 2, characterized in that the mixture contains a porous filler.

4. Use of a mixture according to any one of the claims 1 to 3, characterized in that the mixture contains at least one plastics material having at least partially low-temperature adhesiveness, preferably a $T_{A\ max}$ value (DIN 53 445) of -8° C at most, as a filler and/or a coupling agent.

5. Use of a filler according to any one of the claims 1 to 4, characterized in that the mixture contains at least one bitumen as a filler and/or coupling agent.

6. A process for the protection of building structures against carbon dioxide and/or sulfur oxides , the builidng structure being at least partially coated with a mixture containing binders, characterized in that the coating contains unloaded anion exchangers reversibly binding carbon dioxide and/or sulfur oxides and that the unloaded anion exchangers of the coating are regenerated.

7. The process according to claim 6, characterized in that the building Structure is coated with the mixture with interposition of at least one coupling agent layer between building structure and coating and/or between layers of coating.

8. The process according to claim 7, characterized in that porous coupling agents containing binders and at least one plastics material having low temperature adhesiveness and/or bitumen and - preferably porous - fillers are used.

9. The process according to claim 8, characterized in that coupling agents containing inorganic, in particular hydraulic binders are used.

**Revendications**

1. Utilisation d'un mélange avec en particulier du liant hydraulique pour revetir les corps de construction, en particulier ceux en béton armé, pour la protection contre le dioxyde de carbone et/ou les oxydes de soufre, caractérisée en ce que le mélange contient des échangeurs d'anions non chargés, donc les échangeurs d'anions faiblement basiques, comme base libre, ou les échangeurs d'anions fortement basiques sous forme d'hydroxydes reversiblement liant le dioxyde de carbone et/ou les oxydes de soufre présents dans l'air.

2. Utilisation d'un mélange selon la revendication 1,caractérisée en ce que le mélange contient des charges réactives, en particulier l'acide silicique condensé et/ou le clinker Portland à gros grains.

3. Utilisation d'un mélange selon la revendication 1 ou 2, caractérisé en ce que le mélange contient une charge poreuse.

4. Utilisation d'un mélange selon une des revendications 1 à 3, caractérisée en ce que le mélange contient comme charge et /ou agent de couplage au moins une matière plastique au moins partiellement d'une adhésivité à basse température , de préférence d'une valeur $T_{A\ max}$ (DIN 53 445) de -8° C au plus.

5. Utilisation d'un mélange selon une des revendicatins 1 à 4, caractérisée en ce que le mélange comporte au moins un bitume comme charge et/ou agent de couplage.

6. Procédé pour la protection des corps de construction contre le dioxyde de carbone et/ou les oxydes de

11

soufre, le corps de construction étant revêtu au moins partiellement au moyen d'un mélange comportant des liants, caractérisé en ce que le revêtement contient des échangeurs d'anions non chargés reversiblement liant le dioxyde de carbone et/ou les oxydes de soufre et que les échangeurs d'anions non chargés du revêtement sont regénérés.

7. Procédé selon la revendication 6, caractérisé en ce que le corps de construction est revêtu par le mélange par l'intermédiaire d'au moins une couche d'agent de couplage entre le corps de construction et le revêtement et/ou entre des couches du revêtement.

8. Procédé selon la revendication 7, caractérisé en ce qu'on utilise des agents de couplage poreux d'une teneur en liant et en au moins une matière plastique à adhésivité à basse température et/ou des bitumes et des charges - de préférence poreuses.

9. Procédé selon la revendication 8, caractérisé en ce qu'on utilise des agents de couplage contenant des liants inorganiques, en particulier hydrauliques.